# FASCICULE DE BREVET EUROPEEN

(11) **EP 1 905 217 B1**
(45) Date de publication et mention de la délivrance du brevet: **18.11.2015**
(21) Numéro de dépôt: 06779053.5
(22) Date de dépôt: 13.07.2006
(51) Int. Cl.: H04L 29/12, H04L 29/06, H04L 29/08, H04L 12/28

(54) **PROCEDE DE CONFIGURATION D'UN TERMINAL A TRAVERS UN RESEAU D'ACCES**
VERFAHREN ZUM KONFIGURIEREN EINES ENDGERÄTS ÜBER EIN ZUGANGSNETZWERK
METHOD FOR CONFIGURING A TERMINAL VIA AN ACCESS NETWORK

(30) Priorité: 18.07.2005 FR 0552227
(43) Date de publication de la demande: 02.04.2008
(73) Titulaire: Orange, 75015 Paris (FR)
(72) Inventeur: RADIER, Benoit, F-22700 Perros Guirec (FR); VINEL, Romain, F-22560 Trebeurden (FR); AMELINE, Christophe, F-22300 Lannion (FR); MARREC, Anne, F-22560 Pleumeur Bodou (FR)
(74) Mandataire: Millet, Sandrine
(86) Numéro de dépôt international: PCT/FR2006/050717
(87) Numéro de publication internationale: WO 2007/010160

(56) Documents cités:
- EP-A- 1 355 448
- US-A- 6 049 826
- US-B1- 6 170 008
- US-B1- 6 598 057
- "Session ID", , 30 January 2012 (2012-01-30), XP55020985, Retrieved from the Internet: URL:http://en.wikipedia.org/w/index.php?ti tle=Special:Book&bookcmd=download&collecti on_id=2edc124201eb966d&writer=rl&return_to =Session ID [retrieved on 2012-03-05]

## Description

La présente invention concerne un procédé de configuration d'un terminal à travers un réseau d'accès. Elle concerne également un serveur d'autoconfiguration pour la configuration d'un terminal à travers un réseau d'accès, ainsi qu'un serveur de sessions d'accès au réseau pour la configuration d'un terminal à travers ledit réseau.

L'invention trouve une application particulièrement avantageuse dans le domaine des procédures de configuration de passerelles domestiques ou de terminaux situés dans une installation cliente pour des services souscrits auprès d'un opérateur ou fournisseur de services.

Dans la suite de ce mémoire, on désignera par « terminal » soit un terminal utilisateur, ou terminal client, sur lequel un service est rendu directement, soit une passerelle domestique qui est le point central du réseau domestique d'un client, mais qui peut se comporter parfois en tant que terminal utilisateur, comme dans le cas d'un service de téléphonie sur Internet par exemple. Le terminal accède au service à travers une ligne du client d'un opérateur de réseau d'accès de type RTC (« Réseau Téléphonique Commuté »), l'accès au réseau étant effectué à travers un équipement de type NAS (« Network Access Server ») ou BAS (« Broadband Access Server »).

D'une manière générale, dans les procédures de configuration de terminaux actuellement connues, les données de configuration spécifiques aux services souscrits par le client sont associées à un identifiant de terminal ou à un/des identifiant(s) de service(s), tel que le numéro de série du terminal, l'adresse MAC (« Médium Access Control »), un couple identifiant/mot de passe saisi au niveau du terminal lors de sa configuration initiale, etc. Lorsque le terminal client interroge le serveur d'autoconfiguration, ces identifiants de terminal ou de service(s) permettent de retourner au terminal sa configuration personnalisée. Cependant, cette procédure peut être détournée par un utilisateur malveillant qui, ayant connaissance de l'identifiant du terminal ou de service(s) d'un client, récupère les services souscrits par ce client. En outre, cette procédure peut présenter des complexités de paramétrage pour le client lors de la saisie du couple identifiant/mot de passe par exemple.

Dans le contexte de l'invention, on entendra par serveur d'autoconfiguration (ACS pour « AutoConfiguration Server ») un serveur permettant à un terminal de se paramétrer et de se configurer automatiquement pour qu'il puisse accéder aux services souscrits par le client auprès d'un fournisseur de services en fonction du type du terminal et de droits d'accès aux services du client. Le serveur d'autoconfiguration doit donc contenir l'ensemble des droits d'accès aux services des clients, ainsi que les différents paramètres permettant de configurer les différents types de terminaux.

Deux grandes techniques sont aujourd'hui proposées pour identifier un terminal lors de sa configuration par le réseau.

Selon une première technique, la plus répandue, l'identification du terminal, ou de la passerelle, repose sur un identifiant unique qui lui est propre. Cet identifiant est inscrit dans le matériel même du terminal, comme l'adresse MAC (« Médium Access Control ») ou l'OUI (« Organizationally Unique Identifier »), ou bien dans un logiciel qui pilote le terminal ou la passerelle (clé H235).

Avec cet identifiant unique, le terminal obtient la configuration qui lui revient en téléchargeant un fichier, généralement par le protocole TFTP (« Trivial File Transfer Protocol ») qui est un protocole d'envoi ou de réception de fichiers, comparable à FTP (« File Transfer Protocol ») mais plus simple car sans identification du demandeur. Le protocole HTTP (« HyperText Transfer Protocol ») peut aussi être utilisé.

Le nom du fichier de configuration du terminal demandé est fonction de l'identifiant unique. Le fichier de configuration contient l'ensemble de la configuration des terminaux de l'installation cliente ou de la passerelle, dont les identifiants de services permettant au client d'accéder ensuite aux services souscrits auprès du fournisseur de services.

Le document US 6598057 B1 décrit une telle première technique dans laquelle le fichier de configuration est généré en utilisant l'adresse MAC du terminal.

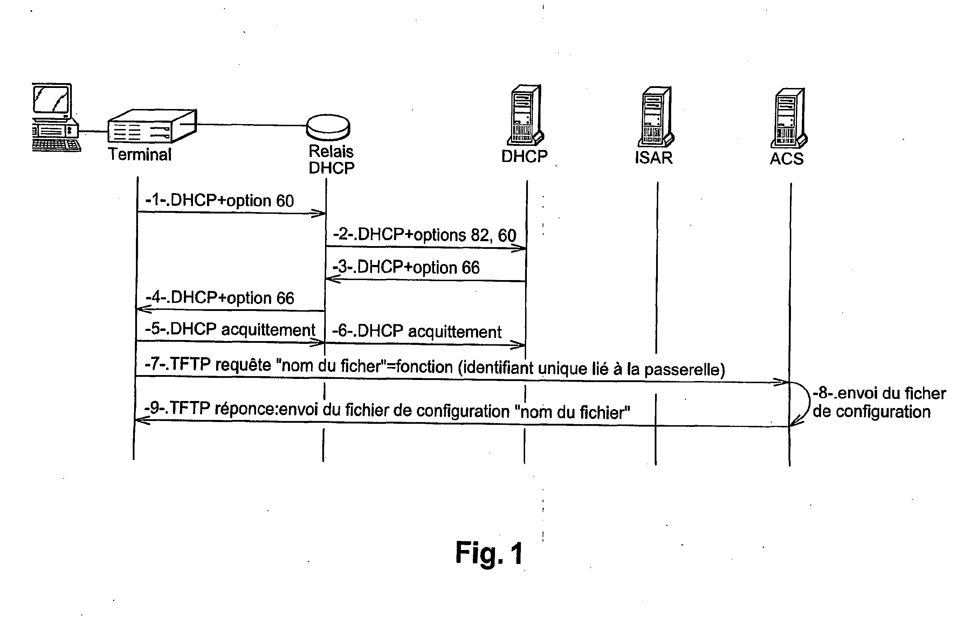

Une deuxième technique, dont un schéma est donné sur la figure 1, consiste à attribuer au terminal une adresse IP et des options de configuration réseau DHCP (« Dynamic Host Configuration Protocol ») en fonction de la ligne du client (option 82). Le type de terminal (option 60) est également communiqué au serveur DHCP d'adresses IP.

Les options retournées au terminal sont notamment l'adresse IP du serveur d'autoconfiguration (option 66) et le nom du fichier de configuration qui sera utilisé par le terminal du client de la ligne. Le terminal est alors en mesure d'obtenir du serveur d'autoconfiguration le fichier de configuration dont le nom lui a été préalablement communiqué.

Des extensions à ce mécanisme sont possibles. En particulier, pour identifier l'utilisateur, le serveur d'autoconfiguration peut générer plusieurs identifiants, dont celui donné à l'utilisateur lors de la souscription au(x) service(s). L'utilisateur coche celui qui lui appartient. Le serveur d'autoconfrguration autorise la demande du terminal et peut ainsi constituer le fichier de configuration du terminal adapté au(x) service(s) souscrit(s) par l'utilisateur.

Ces mécanismes de configuration connus de l'état de la technique posent cependant un certain nombre de difficultés.

Lorsque l'identification du terminal est basée sur un identifiant inscrit dans le matériel, comme l'adresse MAC, l'utilisateur ne peut pas changer de terminal comme il le souhaite, ou l'utiliser après un changement de carte réseau. En effet, s'il ne communique pas au fournisseur de services les informations concernant son nouveau terminal, ou sa nouvelle adresse MAC, afin qu'il soit connu du serveur d'autoconfiguration, il ne pourra pas utiliser ses services. L'utilisateur doit également envoyer les identifiants de son équipement (adresse MAC, type de terminal) s'il l'acquiert en dehors d'un centre de vente agréé par le fournisseur de services, ceci pour la même raison que précédemment.

Le fait d'utiliser l'identifiant unique de terminal pour retrouver le nom du fichier de configuration n'est pas simple à gérer par le serveur TFTP de distribution de fichiers de configuration. Il faut en effet un fichier de configuration par adresse MAC. La gestion de ces identifiants uniques de terminal comme les adresses MAC ajoute une complexité supplémentaire au Système d'Information du fournisseur de services.

En outre, dans le cas où le terminal obtient son adresse IP et le nom du fichier de configuration par le serveur DHCP, en fonction de l'identifiant unique de terminal, on comprend que, s'il change de terminal, l'utilisateur ne pourra plus obtenir d'adresse IP et donc se connecter au réseau.

Ces mécanismes posent aussi des problèmes de sécurité :
- lorsque l'identification du terminal est basée sur un identifiant inscrit dans le matériel, le vol d'un terminal ou d'une passerelle peut entraîner une utilisation frauduleuse temporaire des services,
- lorsque l'identification du terminal est basée sur un identifiant saisi par l'utilisateur lors de la configuration, cet identifiant peut être sujet à détournement, et un utilisateur malveillant peut récupérer la configuration, et les identifiants de services associés, d'un autre utilisateur,
- lorsque l'utilisateur demande un fichier de configuration auprès d'un serveur DHCP, il n'y a aucun moyen de vérifier que le fichier qui sera reçu par l'utilisateur n'aura pas été modifié.

Aussi, le problème technique à résoudre par l'objet de la présente invention est de proposer un procédé de configuration d'un terminal depuis un serveur d'autoconfiguration à travers un réseau d'accès, qui permettrait de pouvoir configurer un terminal de manière fiable, en évitant les difficultés liées aux changements éventuels de terminal ainsi que les risques d'utilisation frauduleuse.

La solution au problème technique posé consiste, selon la présente invention, en ce que ledit procédé comprend une étape de fourniture audit serveur d'autoconfiguration, par un serveur de sessions d'accès audit réseau, d'un identifiant de session d'accès au réseau dudit terminal.

Selon un mode de réalisation, l'invention prévoit que ledit identifiant de session d'accès au réseau contient un identifiant de ligne du terminal dans le réseau d'accès.

Dans le cadre de l'invention, on entend sous le terme « identifiant de ligne » un identifiant réseau unique associé à une ligne d'un client d'un opérateur de réseau d'accès. Cet identifiant généré par le réseau peut aussi bien être inséré dans le protocole d'authentification RADIUS (« Remote Authentication Dial In User Service ») lors d'un attachement de type PPP (« Point to Point Protocol ») au réseau, par exemple attribut 31 « Calling Line Identifier » ou CLID, que par DHCP avec l'option DHCP 82, sous-options « Agent Circuit ID » et « Agent Remote ID ». Cet identifiant peut être basé sur des informations liées aux équipements de réseau (identifiant de port physique ou de circuit virtuel sur un équipement réseau), sur des informations logiques, par exemple numéro de téléphone de la ligne, ou sur tout autre élément permettant de retrouver une ligne cliente de façon unique.

D'une manière générale, le procédé de configuration conforme à l'invention fonctionne de la manière suivante.

Dans une première phase, lors de la vente du terminal, le fournisseur de services saisit dans son Système d'Information l'ensemble des coordonnées du client, à savoir : nom, prénom, adresse, options de services souscrites et les identifiants pour l'utilisation de ces services, etc.

Le fournisseur de services recherche alors et obtient de l'opérateur de réseau d'accès l'identifiant de ligne associé à la ligne du client, qui, selon l'invention, sera l'identifiant principal utilisé par la suite pour la configuration du terminal du client. Cette recherche peut se faire sur la base d'un élément d'identification du client, commun au fournisseur de services et à l'opérateur de réseau d'accès, par exemple : son nom, son adresse, son numéro de téléphone. L'identifiant de ligne retourné par l'opérateur de réseau d'accès est également stocké dans la base du fournisseur de services.

Dans le cas où l'opérateur de réseau d'accès et le fournisseur de services sont un seul et même acteur, l'identifiant de ligne est simplement fourni par le Système d'Information.

Si la vente ne se fait pas en agence, vente en libre-service par exemple, le client doit expédier le coupon comportant le type de terminal acheté, ses coordonnées, les options du ou des services souscrits et son règlement. Le fournisseur de services valide ces informations dans la base client et recherche l'identifiant de ligne associée à ces coordonnées auprès de l'opérateur de réseau d'accès.

Dans une deuxième phase, lors de l'attachement du terminal au réseau, et après la phase de détection automatique du type de carte réseau, des protocoles et des périphériques installés, le terminal est connecté au réseau afin de recevoir la configuration logicielle par téléchargement à partir du serveur d'autoconfiguration. Comme mentionné plus haut, cette connexion est réalisée à travers la ligne RTC via un serveur NAS ou un serveur BAS pour le haut débit.

Le terminal reçoit une adresse IP allouée dynamiquement sans contrôle au préalable par un serveur d'adresses IP DHCP. L'adresse IP du serveur d'autoconfiguration peut être obtenue lors de cette phase d'allocation d'adresse IP, par exemple en utilisant l'option 66 du protocole DHCP. L'adresse IP peut également être allouée par une session PPP.

Le terminal peut interroger le serveur d'autoconfiguration en utilisant un nom de fichier par défaut car, selon une caractéristique de l'invention, le nom de fichier n'est pas utilisé pour retrouver les paramètres de configuration du terminal.

L'adresse IP du terminal qui a été allouée précédemment est utilisée pour identifier le client et permettre au serveur d'autoconfiguration de retrouver l'identifiant de ligne de la session d'accès au réseau en cours et le type de terminal utilisé en interrogeant la base de données des sessions du réseau d'accès.

En retour, si dans la base de données du serveur d'autoconfiguration, l'identifiant de ligne existe avec un profil de services associé et qu'il existe un type de fichier de configuration en fonction du type de terminal, le serveur d'autoconfiguration construit le fichier de configuration en fonction du profil de l'utilisateur, de paramètres personnalisés et du type de terminal. Le terminal client reçoit la configuration logicielle et de services adaptée.

L'utilisateur peut changer de terminal à condition que le type de terminal utilisé soit connu par le serveur d'autoconfiguration. On remarquera qu'aucune mise à jour n'est nécessaire au niveau des bases de données.

Selon un autre mode de réalisation de l'invention, ledit identifiant de session d'accès au réseau contient un identifiant d'utilisateur du terminal. On verra plus loin en détail comment l'utilisation d'un identifiant d'utilisateur couplé à un identifiant de ligne s'applique de manière particulièrement avantageuse au cas d'utilisateurs nomades.

L'invention concerne également un serveur d'autoconfiguration pour la configuration d'un terminal à travers un réseau d'accès, remarquable en ce que ledit serveur d'autoconfiguration comprend une base de données associant un identifiant de session d'accès au réseau dudit terminal, fourni par un serveur de sessions d'accès audit réseau, à des données de configuration à fournir au terminal.

Enfin, l'invention concerne encore un serveur de sessions d'accès à un réseau pour la configuration d'un terminal à travers ledit réseau, remarquable en ce que ledit serveur de sessions d'accès audit réseau comprend une base de données associant un identifiant de session d'accès au réseau dudit terminal à une adresse IP dudit terminal.

La description qui va suivre en regard des dessins annexés, donnés à titre d'exemples non limitatifs, fera bien comprendre en quoi consiste l'invention et comment elle peut être réalisée.

La figure 2 est un schéma d'un premier mode de réalisation du procédé de configuration conforme à l'invention.

La figure 3 est un schéma d'un deuxième mode de réalisation du procédé de configuration conforme à l'invention.

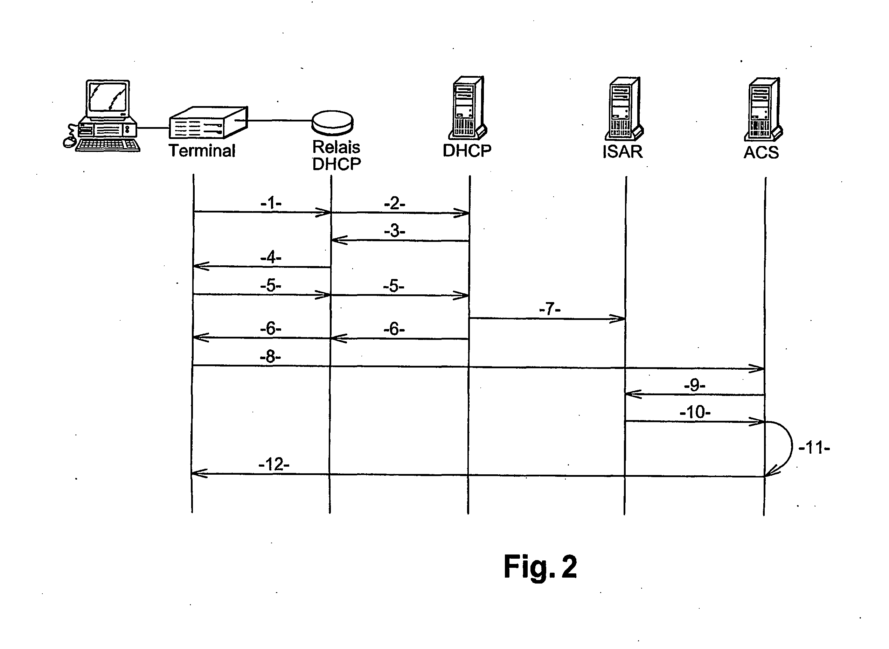

Sur la figure 2 sont représentées les étapes d'un procédé de configuration d'un terminal depuis un serveur d'autoconfiguration, noté ACS, à travers un réseau d'accès comprenant un serveur ISAR (Informations sur les Sessions d'Accès Réseaux) de sessions d'accès audit réseau.

Les premières étapes numérotées de 1 à 6 sont les étapes classiques correspondant à la phase d'attachement du terminal au réseau, identiques à celles présentées précédemment en regard de l'état de la technique. A l'issue de ces étapes, qui s'effectuent par exemple selon le protocole DHCP, le terminal dispose d'une adresse @IP_{source}, de l'adresse IP du serveur de configuration @IP_{ACS} (option 66), et le serveur d'adresses IP DHCP dispose du type de terminal considéré (option 60) et de l'identifiant de la ligne (option 82) utilisée par le terminal dans le réseau d'accès.

L'étape 7 correspond à une étape de mise à jour de la base de données du serveur ISAR avec les informations suivantes :
- le type de terminal connecté,
- l'identifiant de ligne d'attachement du terminal au réseau d'accès,
- l'adresse @IP_{ACS} du serveur d'autoconfiguration qui interrogera la base ISAR,
- l'adresse @IP_{source} du terminal qui est la clef d'interrogation dans la base ISAR pour retrouver ces informations.

La base ISAR peut contenir des informations du Système d'Information du fournisseur de services et de l'opérateur réseau, si ce sont les mêmes acteurs. Si cette relation n'est pas faite à ce niveau elle sera faite par le serveur d'autoconfiguration, lequel est sous la responsabilité du fournisseur de services.

Au cours de l'étape 8, le terminal requiert du serveur ACS d'autoconfiguration qu'il lui fournisse le fichier de configuration nécessaire à la configuration du terminal pour le ou les services qu'il a souscrits. Pour cela, il utilise l'adresse @IP_{ACS} du serveur et un nom de fichier par défaut, le nom du fichier demandé étant sans importance pour recevoir le fichier de configuration adapté au terminal et à l'utilisateur. Ce nom par défaut peut être identique pour tous les terminaux.

Conformément à l'étape 9, le serveur ACS d'autoconfiguration demande au serveur ISAR les informations associées à l'adresse @IP_{source} du terminal client dont émane la requête de l'étape 8. Cette adresse IP est extraite de l'entête de la requête de demande du fichier de configuration. Ces informations sont :
- les identifiants de services associés à l'utilisateur, par exemple le numéro de téléphone, l'identifiant du fournisseur d'accès Internet ou de services IP, etc.
- le type de terminal utilisé.
- l'identifiant de ligne.

Dans l'étape 10, la base ISAR envoie les informations précédentes associées à l'adresse IP @IP_{source} du terminal, et plus particulièrement l'identifiant de ligne qui permet au serveur d'autoconfiguration de retrouver dans sa propre base de données le profil du ou des services associés à l'identifiant de ligne. S'il n'y pas de correspondance entre ces informations et une adresse IP source dans la base, la base ISAR ne peut envoyer aucune information. Le terminal ne pourra donc pas obtenir le fichier de configuration demandé.

L'étape 11 correspond à la création du fichier de configuration du terminal en utilisant les identifiants de service et le type de terminal utilisé. Le type de terminal permet de savoir quel type de fichier de configuration le terminal pourra utiliser. Les identifiants de services permettent de savoir quelles informations spécifiques à l'utilisateur devront être utilisées dans le fichier de configuration. Dans le cas contraire, chaque fichier de configuration par type de terminal et d'utilisateur devra être stocké dans le serveur ACS d'autoconfiguration.

A l'étape 12, le fichier de configuration est envoyé au terminal et installé sur le terminal. L'utilisateur peut utiliser les services sans configuration de sa part.

On notera que, dans le cas où le serveur DHCP gère plusieurs réseaux recouvrant, l'interrogation de la base ISAR peut se faire par les adresses @IP_{source} et @IP_{ACS}.

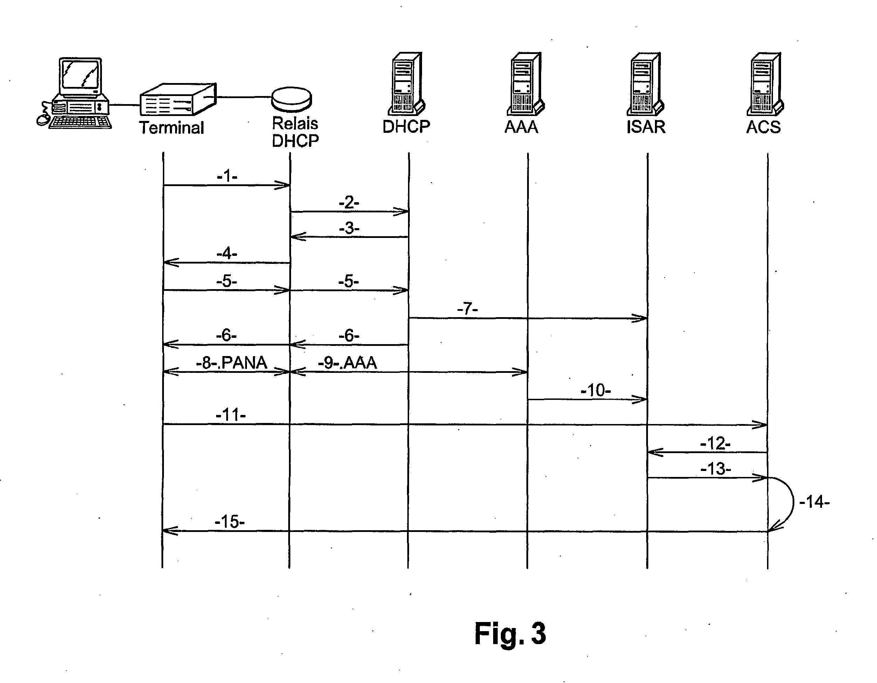

La figure 3 montre une variante du procédé selon l'invention lorsqu'il est mis en oeuvre pour configurer des terminaux d'utilisateurs nomades.

Dans ce cas, la configuration des terminaux en fonction de l'identifiant de ligne ne suffit plus. Pour permettre aux utilisateurs nomades de configurer l'installation d'un client visité, l'invention propose de se baser sur un identifiant d'utilisateur.

En effet, un utilisateur nomade, comme tout client, a nécessairement un identifiant d'utilisateur. Mais, lorsque l'utilisateur est différent du client de la ligne, comme dans le cas du nomadisme, on comprend qu'une authentification de l'utilisateur est nécessaire pour configurer le terminal afin de pouvoir utiliser les services auxquels il a souscrit et non ceux du client de la ligne, cette authentification étant bien entendu inutile pour des clients non nomades, comme cela a été décrit plus haut.

En substance, le procédé de configuration selon l'invention en situation de nomadisme fonctionne de la manière suivante.

Lors de la souscription au(x) service(s), l'opérateur de réseau d'accès associe un identifiant d'utilisateur à l'identifiant de ligne et des paramètres supplémentaires permettant d'authentifier un utilisateur. Ces paramètres supplémentaires sont liés au processus d'authentification de l'utilisateur, par exemple un couple identifiant/mot de passe comme ceux utilisés dans les mécanismes d'authentification réseau classiques connus. L'identifiant d'utilisateur est transmis en plus de l'identifiant de ligne au serveur d'autoconfiguration du fournisseur de services.

Lors de la connexion au réseau d'accès, l'utilisateur nomade s'identifie et s'authentifie auprès de son serveur d'authentification réseau, par exemple par identifiant/mot de passe comme rappelé plus haut. La procédure utilisée n'est pas décrite ici, mais différents protocoles peuvent être utilisés, notamment PPP/RADIUS, PANA ou 802.1X. Si l'authentification réussit, la base ISAR est complétée par le serveur d'authentification. L'identifiant d'utilisateur nomade est rajouté aux informations déjà associées à la session. L'une des clés d'interrogation de la base ISAR, associé à une session, est l'adresse IP du terminal.

Dès que le terminal de l'utilisateur est attaché au réseau, il demande sa configuration réseau et services au serveur d'autoconfiguration.

Le serveur d'autoconfiguration interroge la base ISAR en fonction de l'adresse IP du terminal comme précédemment, non seulement pour retrouver l'identifiant de ligne, mais aussi pour récupérer l'identifiant d'utilisateur nomade. Si l'utilisateur ne s'est pas authentifié, l'identifiant de la ligne du client est indiqué au serveur d'autoconfiguration. Si l'utilisateur s'est authentifié, l'identifiant de l'utilisateur est indiqué au serveur d'autoconfiguration, ainsi que l'identifiant du client de la ligne.

Le serveur d'autoconfiguration crée alors le fichier de configuration, mais il peut également générer un fichier en fonction de l'identité du client et/ou de l'utilisateur. Il pourra également vérifier si l'utilisateur a le droit d'être nomade en contrôlant l'identifiant de ligne associé à l'identifiant utilisateur nomade. Le terminal peut être configuré pour le client et/ou l'utilisateur nomade. Un service peut être activé sur un même terminal pour plusieurs utilisateurs différents.

La figure 3 montre une mise en oeuvre détaillée du procédé qui vient d'être décrit pour la configuration d'un terminal pour un utilisateur nomade.

Les étapes 1 à 7 sont identiques à celles déjà décrites en regard de la figure 2. A l'issue de ces étapes, une adresse IP @IP_{source} est attribuée au terminal par le serveur DHCP et la base ISAR est mise à jour en associant cette adresse IP @IP_{source} à l'identifiant de ligne du client (option 82).

Les étapes 8-9 correspondent à l'identification de l'utilisateur par identifiant/mot de passe, par exemple, auprès d'un serveur d'authentification réseau de type AAA (« Authentication, Authorization and Accounting »). Le mécanisme d'authentification présenté ici est celui connu sous le nom de PANA (« Protocol for carrying Authentication for Network Access »). Un autre exemple d'authentification est une authentification basée sur le protocole RADIUS.

Si l'authentification réussit, l'étape 10 est exécutée au cours de laquelle la base ISAR est mise à jour par le serveur AAA d'authentification en rajoutant l'identifiant d'utilisateur nomade au couple déjà existant @IP_{source}/identifiant de ligne.

Les étapes 11 à 15 concernent la création et la récupération du fichier de configuration du terminal en fonction des différents paramètres retournés lors de l'interrogation de la base ISAR. Le serveur ACS d'autoconfiguration peut contrôler le nomadisme de l'utilisateur et configurer le terminal même si l'utilisateur est différent du client de la ligne. Le terminal peut être configuré pour le client de la ligne et/ou pour l'utilisateur nomade.

Dans le cas où l'utilisateur nomade utilise le terminal du client visité, il faut mettre à jour ce terminal pour que le client de la ligne ne puisse pas utiliser les services de l'utilisateur nomade.

Le mécanisme proposé pour mettre à jour le terminal lors de la déconnexion de l'utilisateur au réseau est identique à la mise à jour du terminal lors de la connexion aux services de l'utilisateur nomade, mécanisme décrit ci dessus. Lorsque l'utilisateur nomade quitte l'installation du réseau visité, le serveur d'authentification est prévenu de la fin de session de l'utilisateur. Le serveur d'authentification met à jour la base ISAR en supprimant les informations de l'utilisateur associées à la session du terminal (@IP_{source}, identifiant de ligne). La base ISAR notifie le serveur d'autoconfiguration de mettre à jour le terminal client qui a été configuré pour l'utilisateur nomade. Le serveur d'autoconfiguration crée un nouveau fichier de configuration adapté uniquement au client de la ligne ou crée un fichier de déconfiguration qui permet de supprimer la configuration associée à l'utilisateur nomade. Dans ces deux cas, l'utilisateur du terminal ne pourra plus se connecter aux services de l'utilisateur nomade.

## Revendications

1. Procédé de configuration d'un terminal depuis un serveur d'autoconfiguration à travers un réseau d'accès, dans lequel le serveur d'autoconfiguration reçoit une requête de fourniture d'un fichier de configuration émise par le terminal, **caractérisé en ce que** ledit procédé comprend les étapes suivantes mises en oeuvre par le serveur d'autoconfiguration :
- une étape d'envoi auprès d'un serveur (ISAR) de sessions d'accès audit réseau d'une demande d'un identifiant de session d'accès au réseau associé à une adresse IP (@IP_{source}) du terminal, extraite de la requête de fourniture ;
- une étape de réception en provenance du serveur de sessions d'accès de l'identifiant de session d'accès ;
- une étape de création du fichier de configuration en fonction de l'identifiant de session d'accès reçu.

2. Procédé de configuration selon la revendication 1, dans lequel ledit identifiant de session d'accès au réseau contient un identifiant de ligne du terminal dans le réseau d'accès.

3. Procédé de configuration selon la revendication 2, dans lequel ledit identifiant de ligne est fourni audit serveur (ISAR) de sessions d'accès au réseau par un serveur (DHCP) d'adresses IP.

4. Procédé de configuration selon l'une quelconque des revendications 1 à 3, dans lequel ledit identifiant de session d'accès au réseau contient un identifiant d'utilisateur du terminal.

5. Procédé de configuration selon la revendication 4, dans lequel ledit identifiant d'utilisateur est fourni audit serveur (ISAR) de sessions d'accès au réseau par un serveur (AAA) d'authentification réseau.

6. Serveur d'autoconfiguration pour la configuration d'un terminal à travers un réseau d'accès, comprenant des moyens de réception d'une requête de fourniture d'un fichier de configuration émise par le terminal **caractérisé en ce que** ledit serveur (ACS) d'autoconfiguration comprend en outre :
- des moyens d'envoi auprès d'un serveur (ISAR) de sessions d'accès audit réseau d'une demande d'un identifiant de session d'accès au réseau associé à une adresse IP (@IP_{source}) du terminal, extraite de la requête de fourniture ;
- des moyens de réception en provenance du serveur de sessions d'accès de l'identifiant de session d'accès ;
- une base de données associant un identifiant de session d'accès au réseau dudit terminal à des données de configuration à fournir au terminal ;
- des moyens de création du fichier de configuration par interrogation de la base de données.

7. Serveur d'autoconfiguration selon la revendication 6, dans lequel ledit identifiant de session d'accès au réseau contient un identifiant de ligne du terminal dans le réseau d'accès.

8. Serveur d'autoconfiguration selon l'une des revendications 6 ou 7, dans lequel ledit identifiant de session d'accès au réseau contient un identifiant d'utilisateur du terminal.

9. Serveur de sessions d'accès à un réseau pour la configuration d'un terminal à travers ledit réseau, **caractérisé en ce que** ledit serveur (ISAR) de sessions d'accès audit réseau comprend
- une base de données associant un identifiant de session d'accès au réseau dudit terminal à une adresse IP (@IP_{source}) dudit terminal ;
- des moyens de réception en provenance d'un serveur d'autoconfiguration d'une demande de l'identifiant de session d'accès au réseau associé à l'adresse IP du terminal ;
- des moyens d'envoi au serveur d'autoconfiguration de l'identifiant de session d'accès obtenu de ladite base de données.

10. Serveur de sessions d'accès au réseau selon la revendication 9, dans lequel ledit identifiant de session d'accès au réseau contient un identifiant de ligne du terminal dans le réseau d'accès.

11. Serveur de sessions d'accès au réseau selon l'une des revendications 9 ou 10, dans lequel ledit identifiant de session d'accès au réseau contient un identifiant d'utilisateur du terminal.

## Patentansprüche

1. Verfahren zur Konfiguration eines Endgeräts ausgehend von einem Autokonfigurationsserver über ein Zugangsnetz, wobei der Autokonfigurationsserver eine vom Endgerät ausgegebene Lieferanfrage einer Konfigurationsdatei empfängt, **dadurch gekennzeichnet, dass** das Verfahren die folgenden vom Autokonfigurationsserver durchgeführten Schritte enthält:
- einen Schritt des Sendens bei einem Server (ISAR) von Zugangssitzungen zum Netz einer Anforderung einer Netzzugangssitzungskennung, die einer aus der Lieferanfrage entnommenen IP-Adresse (@IP_{source}) des Endgeräts zugeordnet ist;
- einen Schritt des Empfangs der Zugangssitzungskennung vom Zugangssitzungsserver;
- einen Schritt der Erzeugung der Konfigurationsdatei abhängig von der empfangenen Zugangssitzungskennung.

2. Konfigurationsverfahren nach Anspruch 1, wobei die Netzzugangssitzungskennung eine Leitungskennung des Endgeräts im Zugangsnetz enthält.

3. Konfigurationsverfahren nach Anspruch 2, wobei die Leitungskennung von einem IP-Adressenserver (DHCP) an den Netzzugangssitzungsserver (ISAR) geliefert wird.

4. Konfigurationsverfahren nach einem der Ansprüche 1 bis 3, wobei die Netzzugangssitzungskennung eine Benutzerkennung des Endgeräts enthält.

5. Konfigurationsverfahren nach Anspruch 4, wobei die Benutzerkennung von einem Netzauthentifizierungsserver (AAA) an den Netzzugangssitzungsserver (ISAR) geliefert wird.

6. Autokonfigurationsserver zur Konfiguration eines Endgeräts über ein Zugangsnetz, der Einrichtungen zum Empfang einer vom Endgerät ausgegebenen Lieferanfrage einer Konfigurationsdatei enthält, **dadurch gekennzeichnet, dass** der Autokonfigurationsserver (ACS) außerdem enthält:
- Einrichtungen zum Senden bei einem Server (ISAR) von Zugangssitzungen zum Netz einer Anforderung einer Netzzugangssitzungskennung, die einer aus der Lieferanfrage entnommenen IP-Adresse (@IP_{source}) des Endgeräts zugeordnet ist;
- Einrichtungen zum Empfang der Zugangssitzungskennung vom Zugangssitzungsserver;
- eine Datenbank, die eine Netzzugangssitzungskennung des Endgeräts an das Endgerät zu liefernden Konfigurationsdaten zuordnet;
- Einrichtungen zur Erzeugung der Konfigurationsdatei durch Abfrage der Datenbank.

7. Autokonfigurationsserver nach Anspruch 6, wobei die Netzzugangssitzungskennung eine Leitungskennung des Endgeräts im Zugangsnetz enthält.

8. Autokonfigurationsserver nach einem der Ansprüche 6 oder 7, wobei die Netzzugangssitzungskennung eine Benutzerkennung des Endgeräts enthält.

9. Netzzugangssitzungsserver für die Konfiguration eines Endgeräts über das Netz, **dadurch gekennzeichnet, dass** der Server (ISAR) von Zugangssitzungen zum Netz enthält
- eine Datenbank, die eine Netzzugangssitzungskennung des Endgeräts einer IP-Adresse (@IP_{source}) des Endgeräts zuordnet;
- Einrichtungen zum Empfang einer Anforderung der der IP-Adresse des Endgeräts zugeordneten Netzzugangssitzungskennung von einem Autokonfigurationsserver;
- Einrichtungen zum Senden der von der Datenbank erhaltenen Zugangssitzungskennung an den Autokonfigurationsserver.

10. Netzzugangssitzungsserver nach Anspruch 9, wobei die Netzzugangssitzungskennung eine Leitungskennung des Endgeräts im Zugangsnetz enthält.

11. Netzzugangssitzungsserver nach einem der Ansprüche 9 oder 10, wobei die Netzzugangssitzungskennung eine Benutzerkennung des Endgeräts enthält.

## Claims

1. Configuration method for configuring a terminal from an autoconfiguration server through an access network, in which the autoconfiguration server receives a configuration file provision request issued by the terminal, **characterized in that** the said method comprises the following steps implemented by the autoconfiguration server:
- a step of dispatching to a server (ISAR) of access sessions to the said network of a request for a network access session identifier associated with an IP address (@IP_{source}) of the terminal, extracted from the provision request;
- a step of receiving the access session identifier from the access sessions server;
- a step of creating the configuration file as a function of the access session identifier received.

2. Configuration method according to Claim 1, in which the said network access session identifier contains a line identifier for the terminal in the access network.

3. Configuration method according to Claim 2, in which the said line identifier is provided to the said network access sessions server (ISAR) by an IP address server (DHCP).

4. Configuration method according to any one of Claims 1 to 3, in which the said network access session identifier contains a user identifier for the terminal.

5. Configuration method according to Claim 4, in which the said user identifier is provided to the said network access sessions server (ISAR) by a network authentication server (AAA).

6. Autoconfiguration server for the configuration of a terminal through an access network, comprising means for receiving a configuration file provision request issued by the terminal, **characterized in that** the said autoconfiguration server (ACS) furthermore comprises:
- means for dispatching to a server (ISAR) of access sessions to the said network of a request for a network access session identifier associated with an IP address (@IP_{source}) of the terminal, extracted from the provision request;
- means for receiving the access session identifier from the access sessions server;
- a database associating a network access session identifier for the said terminal with configuration data to be provided to the terminal;
- means for creating the configuration file by interrogating the database.

7. Autoconfiguration server according to Claim 6, in which the said network access session identifier contains a line identifier for the terminal in the access network.

8. Autoconfiguration server according to one of Claims 6 or 7, in which the said network access session identifier contains a user identifier for the terminal.

9. Server of access sessions to a network for the configuration of a terminal through the said network, **characterized in that** the said server (ISAR) of access sessions to the said network comprises
- a database associating a network access session identifier for the said terminal with an IP address (@IP_{source}) of the said terminal;
- means for receiving a request from an autoconfiguration server for the network access session identifier associated with the IP address of the terminal;
- means for dispatching the access session identifier obtained from the said database to the autoconfiguration server.

10. Network access sessions server according to Claim 9, in which the said network access session identifier contains a line identifier for the terminal in the access network.

11. Network access sessions server according to one of Claims 9 or 10, in which the said network access session identifier contains a user identifier for the terminal.
